# EUROPEAN PATENT SPECIFICATION

(11) **EP 2 991 922 B1**
(45) Date of publication and mention of the grant of the patent: **08.02.2017**
(21) Application number: 14731023.9
(22) Date of filing: 24.04.2014
(51) Int. Cl.: B65G 47/90, B25J 9/10, B23Q 5/34

(54) **MANIPULATOR FOR PICKING UP AND POSITIONING PIECES**
MANIPULATOR ZUM AUFNEHMEN UND POSITIONIEREN VON TEILEN
MANIPULATEUR POUR LE RAMASSAGE ET LE POSITIONNEMENT DE PIÈCES

(30) Priority: 03.05.2013 IT MI20130726
(43) Date of publication of application: 09.03.2016
(73) Proprietor: Cosberg S.p.A., 24030 Terno D'Isola (Bergamo) (IT)
(72) Inventor: VISCARDI, Gianluigi Carlo, I-24030 Terno D'Isola (Bergamo) (IT)
(74) Representative: Crippa, Paolo Ernesto
(86) International application number: PCT/IB2014/060970
(87) International publication number: WO 2014/177979

(56) References cited:
- DE-U1- 20 004 746
- US-A- 3 988 938
- US-A- 4 289 040

## Description

The present invention relates to a device for manipulating objects between a first position and a second position, in particular of the 'pick-and-place" type.

In the assembly sector of mechanical components and the performance of some processing, manipulator devices are generally used able to grasp an object from a pick-up position
sometimes fed via a conveyor belt, moving it towards a release position, sometimes on another conveyor belt, following a predetermined path in order to avoid possible obstacles interposed between such pick-up and release positions.

In particular, manipulating devices are known, having a manipulator arm movable parallel to itself in a guided manner via a kinematic coupling with transferor-cam so that a free end of the arm, having a gripping element travels along a predetermined path.

The document EP1272409 of FESTO AG & CO discloses one such manipulator, having a pick-up and repositioning gear for pieces comprising at least one oscillating arm, which can be pushed to give an oscillatory movement by rotating around an axis of rotation, so that said arm acts to achieve a gripping and perform an oscillating movement. This arm moves along a predetermined manipulation path without changing its spatial orientation. The support is connected to a curved profile which is engaged on a track defining the desired manipulation path.
Furthermore, the support is mounted so as to obtain a movement path at least partially displaced with respect to the axis of rotation and thus able to perform a radial movement, superimposed on the movement around the axis of rotation.

Such a known manipulator of objects, although allowing the support for the gripping element to move parallel to itself along a trajectory which at least partially deviates from a circular path, has the following disadvantages.

The known device, in fact, does not permit rapid achievement of flexibility in the trajectory of the manipulator, forcing the slow replacement of the support determining the trajectory of the gripping element.

In the need, in fact, to vary the support path of the gripping element, for example, to vary the distance between a pick-up point and a release point, or to vary the shape of the path to be followed by the support of the gripping element - for example, to pass beyond a different obstacle manipulator of different dimensions than the previous one with the manipulator, it would be necessary to disassemble the plates, in fact disassembling the entire manipulator and reassembling others in their place with a different groove shape.

A known device such as the EP1272409 makes the task of replacing or moving the plates very laborious, requiring the removal of many components installed before the plates, which 15 thus prevent them from being easily reached, and forcing an unacceptable downtime of the system.

Other similar incomplete solutions are known from US4289040, US4740134, DE29618418, DE9105666, DE3603650, US1766573, US3902606, US3921822, US4400984, US4411587, 20 US4441852, US4585389, EP1710448, US2004197182, DE102004004896, EP1538117.

A manipulator according to the preamble of claim 1 is known from document US 3,988,938.

The purpose of the present invention is therefore to device and make available a manipulator of objects which satisfies the above requirements and at least partly overcome the drawbacks complained of herein as regards the known technique.

In particular, the task of the present invention is to provide a manipulator of the "pick-and-place" type which makes it possible to modify the trajectory of the gripping element, in an extremely simple and quick manner.

These and other purposes and advantages are achieved by means of a manipulator as described in claim 1, as well as by the method of claim 15.

Further purposes, solutions and advantages are shown in the embodiments described and claimed below in the dependent claims appended hereto.

Different embodiments of the invention are described below by means of examples of embodiments given merely by way of non-limiting examples referring in particular to the appended drawings, wherein:

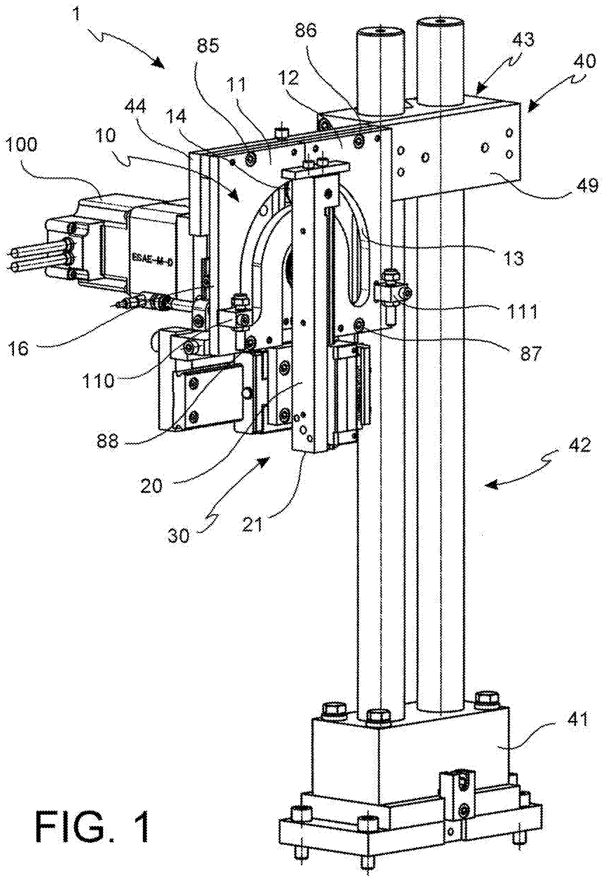

- figure 1 shows a perspective view of a manipulator according to the invention;

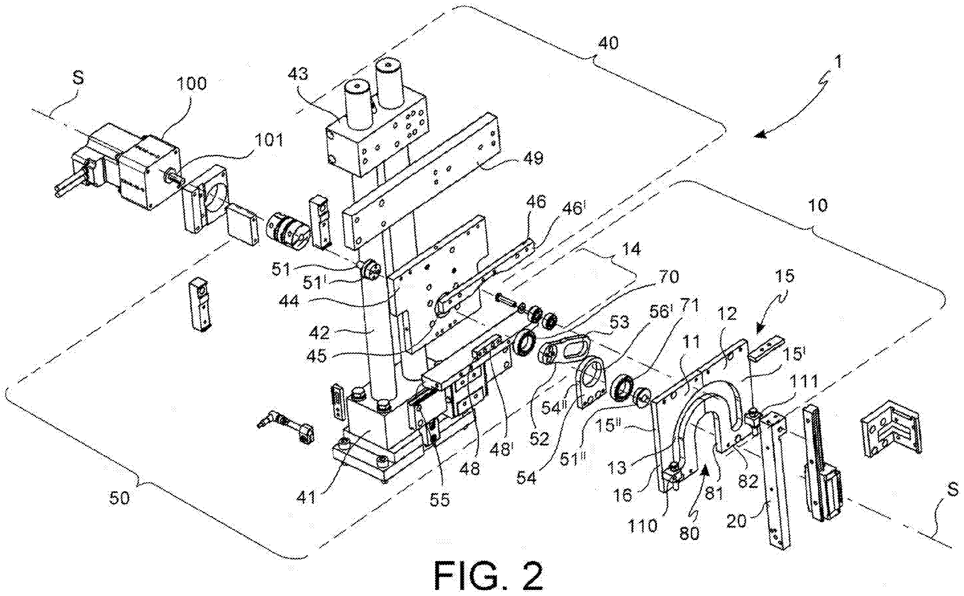

- figure 2 shows an exploded perspective view of the device in Figure 1;
- Figure 3 shows a side view of a manipulator as shown in Figure 1;

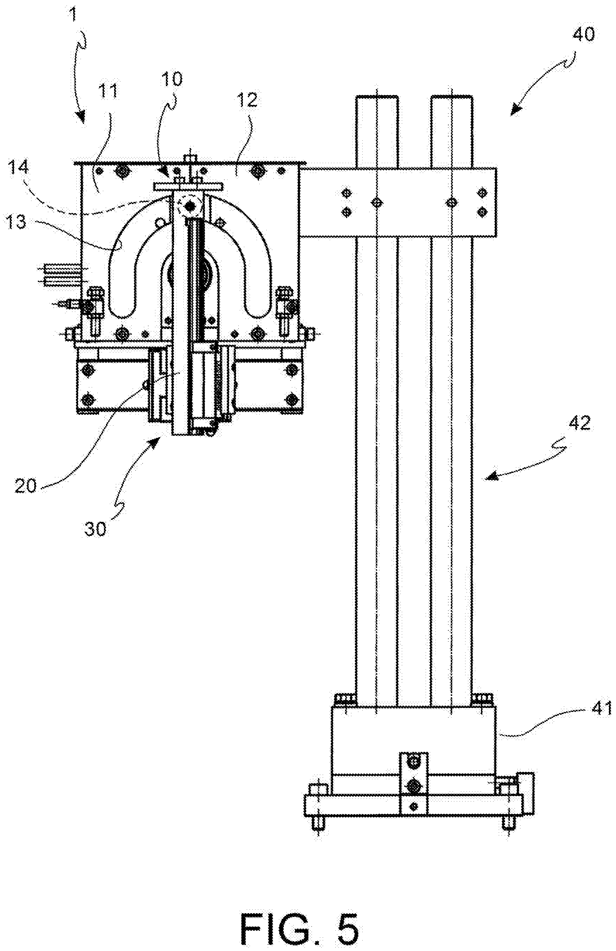

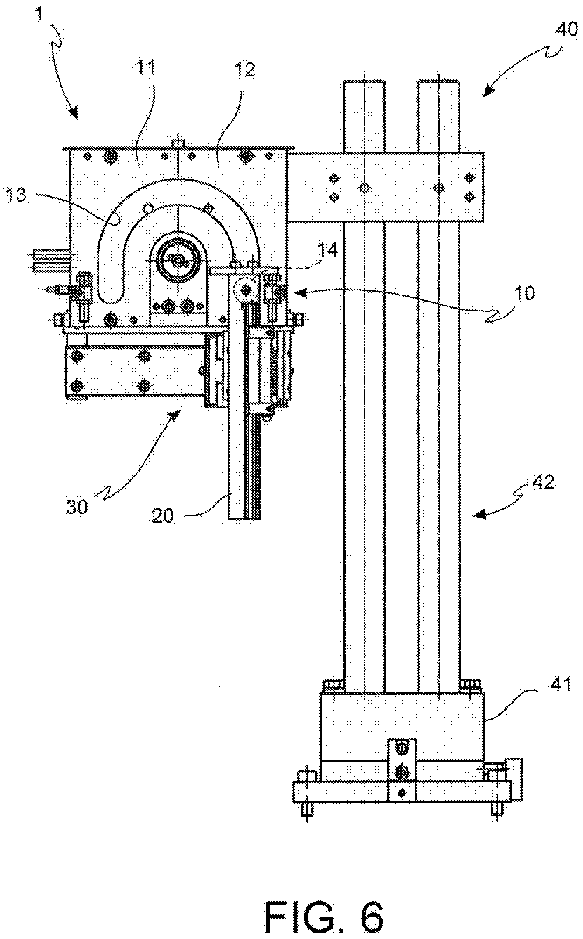

- figures 4 to 6 show a front view of such a manipulator respectively in three different positions during the stroke of the mobile gripping arm;
- Figure 7 shows a view from above of the manipulator in Figure 1;
- Figure 8 shows the manipulator according to the invention in two end positions corresponding to a pick-up position and a release position;

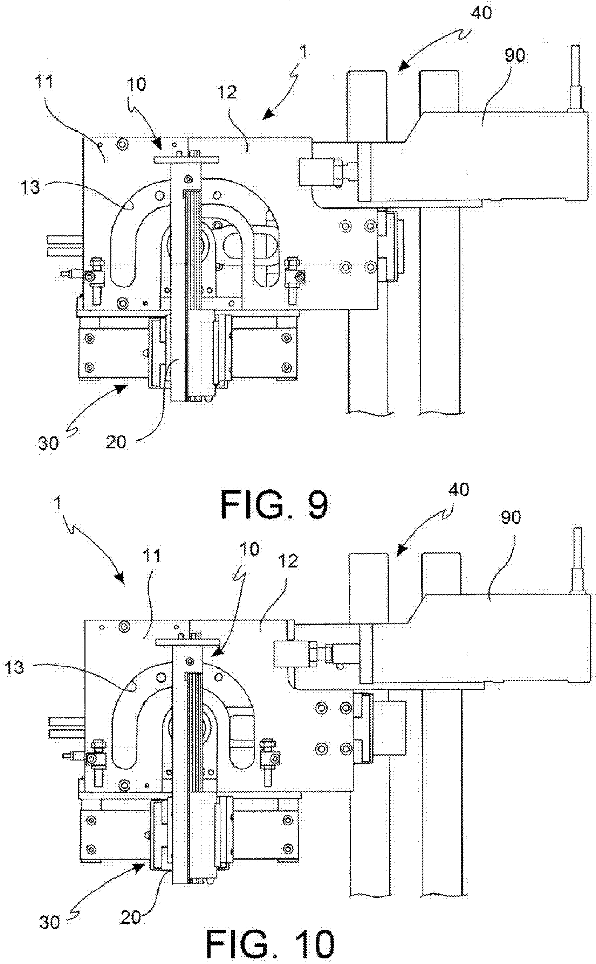

- figures 9 and 10 show a front view of a different embodiment of a manipulator according to the invention having an actuator to change the shape of the path of the mobile gripping arm, respectively in a first and a second position of the guide walls.

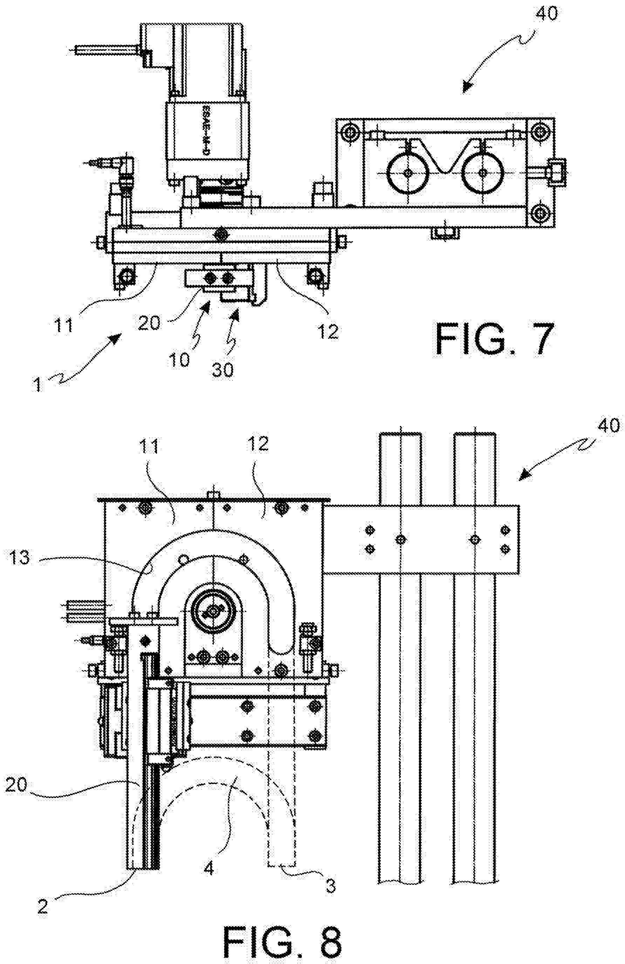

With reference to the drawings, a manipulator according to the invention, is globally denoted by reference numeral 1 With reference to figure 8, the manipulator 1 is able to move a piece between a first position 2 to a second position 3 according to a predefined path - for example curvilinear 4.

The manipulator 1 includes a load-bearing structure 40 to which a movable gripping arm 20 configured to support a gripping element of the piece (not shown in figure) is movably coupled.

The manipulator 1 further comprises the mobile gripping arm 20 to support a gripping element of the piece, said mobile gripping arm 20 being coupled to the load-bearing structure 40 by coupling means.

Such coupling means comprise a cam-transferor coupling 10 and a sliding cross coupling 30, configured so that each point of the mobile gripping arm 20 follows a trajectory equal to said curved path 4.

The aforementioned cam-transferor coupling 10 includes a guide channel, or cam 13, made in a guide wall 15, said guide wall 15 being connected to said load-bearing structure called 40, said guide channel 13 having the shape of said path 4, and a driven pin or transferor 14, projecting transversally to said mobile gripping arm 20, slidingly engaged in said cam 13.

The aforesaid sliding cross coupling 30 is configured to allow the movement of the mobile gripping arm 20 along a first linear direction of sliding 33 substantially parallel to
said 15 wall and along a second linear sliding direction 34 substantially parallel to said wall and perpendicular to the first direction 33, so that the mobile gripping arm 20 can move according to any composition of movements along said
first 33 and second direction 34.

According to one embodiment the manipulator comprises an actuation group 50 comprising an input shaft 51 of the movement defining an axis of rotation S-S substantially orthogonal to said guide wall 15, and an oscillating arm 52 having a radial groove 53 which extends in a radial direction in relation to the rotation axis S-S, in which the transferor is simultaneously engaged to slide in said radial groove 53 and in said cam 13, said actuation group 50 transforming the rotary movement of the motion input element 51 into a movement of the transferor along the cam 13.

According to the present invention the actuation group 50 is positioned between the load-bearing structure 40 of the manipulator and the guide wall 15. This way the guide wall 15 remains totally accessible from the front simplifying its complete removal or replacement in case of wishing to change the shape of the guide channel or cam 13 and thus the shape of the path 4 of the mobile gripping arm 20.

More in particular, the oscillating arm 52 is interposed between the guide wall 15 and the support wall 44 in a direction parallel to the axis of rotation S-S.

According to one embodiment, the guide wall 15 has a rear face 15 " facing the support wall 44 and a front face 15' opposite said rear wall 15", a wall rim 16 which laterally delimits it connecting said front face 15' and said ear face 15'', wherein said wall is accessible in a direction parallel to the axis of rotation S-S from the side of the front face 15 '.

According to one embodiment, the guide wall 15 10 detachably attached to the support wall 44 by means of connection elements 85, 86, 87, 88 accessible in a direction parallel to the rotation axis S-S towards the guide wall 15 on the side of the front face 15'.

According to one embodiment, the connection elements 85, 86, 87, 88 avoid engaging the wall rim. This way, to remove the guide wall 15, there is no need to access the wall in different directions to a direction parallel to the rotation axis S-S.

According to one embodiment said attachment means (85, 86, 87, 88) comprise attachment screws screwing in directions parallel to the direction of rotation (S-S).

according to one embodiment, the cam 13 made in the guide wall 15 is substantially a U-shape comprising two straight end sections and a curved section connecting them. In other words, the guide channel or cam 13 is delimited by a closed cam rim. In other words the guide groove or cam 13 is a groove passing through the guide wall 15 and configured to be completely crossed by the driven pin or transferor 14.

According to one embodiment, the guide wall 15 has a front face 15' and an opposite rear face 15" facing the support structure 40.

The front face 15' may be operationally facing an operator who intends to replace or modify the guide wall 15.

According to one embodiment said actuation group 50 is completely positioned beyond said rear face 15" in the outgoing direction from said wall towards the support structure 40.

According to one embodiment, the guide wall 15 is formed of at least two wall elements 11 and 12 couplable to each other to form said guide wall 15, wherein the guide groove or cam 13 crosses all the wall elements 11, 12 continuously to form a single guide channel or cam 13.

for example, the guide wall 15 consists of two wall elements 11 and 12 couplable to each other to form said guide wall 15 wall, wherein the guide channel or cam 13 crosses both wall elements items 11, 12 continuously to form a single guide channel or cam 13.

In other words, each guide wall element 11 and 12 comprises a portion of groove or cam 13.

According to one embodiment, the load-bearing structure 40 comprises a support element 44 attached to said load-bearing structure 40 which supports said guide wall 15, said actuation group 50 being positioned between said support element 44 and said guide wall 15.

According to one embodiment, the support element44 is a support wall 44 supporting said guide wall 15 so that said guide wall 15 is substantially parallel to said support wall 44 forming an interspace 47 between said support wall 44 and said guide wall 15, of a thickness such as to accommodate within it said crank 52 and allow the rotation of said crank 52 inside said interspace 47.

According to one embodiment, the support wall 44 comprises an upper spacer element 46 having a thickness equal to the thickness of said interspace 47 adapted to form a higher support surface 46 ' for said guide wall 15.

According to one embodiment, the support wall comprises a lower spacer element 48 having a thickness equal to the thickness of said interspace 47, adapted to form a lower support surface 48' for said guide wall 15.

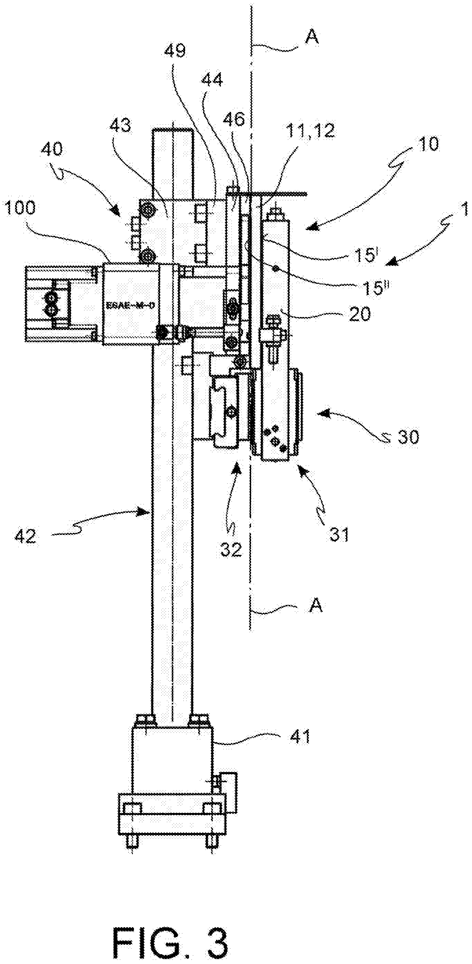

According to one embodiment, the upper support surface 46' and the lower support surface10 48' are coplanar and define a common support plane A-A for said rear wall face 15'', as shown in figure 3.

According to one embodiment, the lower spacer 48 is configured to further support said 15 sliding cross coupling 30.

Such lower spacer element 48, can in fact sustain a bar 55 parallel to the support wall 44, said bar 55 supporting the sliding cross coupling 30.

According to one embodiment each guide wall element 11 and 12 may be formed of a plate, wherein said front face 15 ' and said rear ace 15'' are for example parallel to each other.

The at least one guide plate 11 and 12 is, preferably flat or alternatively may be curved or bent into a curved surface, for example, but not necessarily as a portion of cylinder, for example with a vertical axis. In this case the mobile gripping arm 20 could follow a curved path 4 lying not on a plane but on a cylindrical surface.

According to one embodiment, each guide wall element 11, 12 guide is a plate, preferably flat.

According to one embodiment, the support wall 44 is a plate, preferably flat.

According to one embodiment, the support wall 44 is orthogonal to the rotation axis S-S.

According to one embodiment, the input shaft of the movement 51 is supported so as to rotate by the support wall 44.

More in particular, according to one embodiment, the input shaft of the movement 51 comprises two end portions 51' and 51'' assembled or attached to the oscillating arm 52 on opposite sides. Each end portion 51' and 51'' is in turn supported by a respective rolling bearing or bushing.

For example, but not necessarily a first end 51' is rotatably constrained in a hole 45 in the support wall 44, and a second end 51" is rotatably constrained in a hole 54' made in a bearing support 54 attached to the lower spacer 48 and parallel to the support wall 44.

According to one embodiment, the manipulator according to claim 6, wherein said lower spacer 48 supports a bearing support 54 for said movement input shaft 51 consisting of a plate with a plate edge 54'', said bearing support plate 54 being attached to said lower spacer 48 parallel to said support wall.

According to one embodiment, the bearing support 54 is a plate shaped according to a predefined contour or plate edge 54''.

According to one embodiment, the bearing support 54 has the same thickness as the guide or guide plate 15. For example, the bearing support 54 is a plate having three consecutive straight sides, two of which are parallel and a fourth side in a semicircle. For example, the bearing support 54 remains operationally aligned with said guide wall 15.

According to one embodiment the holes 45 and 54' are configured to house respective bearings 70 and 71 inside them.

According to one embodiment, the guide wall 15 comprises an aperture adapted to house inside it the support bearing 54.

According to one embodiment the guide wall 15 comprises an aperture 80 having a complementary opening rim 81 to the plate edge 54'' of the bearing support 54, so that said plate 54" of the bearing support 54 and said guide wall 15 are aligned on the same support surface defined by said lower spacer 48.

According to one embodiment, the opening 80 of the guide wall 15 guide is open towards the outside of the guide wall15 at a rim 82 of said guide wall 15 so that said wall 15 is removable from the load-bearing structure 40 without removing other components of the manipulator 1.

According to one embodiment, the guide wall is a flat plate consisting of two separable, coplanar plate portions 11 and 12.

According to one embodiment, the two plate portions 11 and 12 are movable in away/towards each other in a coplanar manner and so as to vary the shape of the guide groove or cam 13.

According to one embodiment, the manipulator comprises a linear actuator 90 adapted to move at least one of said plate portions 11, 12 away /towards each other.

According to one embodiment, the manipulator 1 comprises a rotary actuator 100 having a motor shaft 101 kinematically connectable to the input shaft of movement 51. For example such rotary actuator is a hydraulic motor.

According to one embodiment, the manipulator 1 further comprises a speed control of the motor shaft 101.

According to one embodiment, the manipulator 1 comprises proximity sensors 110, 111 to detect the location of the transferor 14 and adapted to transmit a proximity signal to the control, mounted on the guide wall 15 or respectively on said two portions of plate 11, 12, at or near the end of said guide groove or cam 13, said speed control commanding said rotary actuator in a determined manner on the basis of said proximity signal.

According to one embodiment, the sliding cross coupling 20 30 comprises a first prismatic coupling 31 between said mobile gripping arm 20 and a skate so that said movable gripping arm can slide in relation to said skate along a first sliding direction, and a second prismatic coupling between said skate and said load bearing structure so that said skate can slide in relation to the load bearing structure in a second sliding direction, perpendicular to the first sliding direction.

Such a coupling permits the movement of the mobile gripping arm, possibly equipped to grasp a piece, to move on a plane parallel to itself, in other words not to vary its orientation in space. This requirement is dictated by the fact that the possible gripping device is often shaped to pick up and release the object or piece according to the same predefined orientation.

The guide wall has a wall rim 16 or rim area, which delimits it laterally joining said front face 15' and said rear face 15".

According to one embodiment such a sliding cross coupling (30) is mounted to the manipulator so as to lie outside of wall rim 16. Thus the removal of the guide wall is allowed without having to remove the sliding coupling 30.

In other words, the guide wall 15 is mounted externally with respect to the cross coupling 30.

In yet other words the cross-coupling is positioned to leave the front face 15 'of the guide wall 15, free of obstacles to a simple dismantling of said wall.

The mobile gripping arm 20 is preferably an elongated body and is supported by the manipulator preferably in a vertical direction so as to be able to hold a gripping element in correspondence of a lower end thereof. In other words the elongated body of the mobile gripping arm 20 is secured to the manipulator to move along a vertical plane.

According to one embodiment, the transferor is attached to the elongated element next to the end opposite to that to which the gripping element is fixed.

According to one embodiment the load bearing structure 40 comprises a base 41 adapted to be stably mounted on a surface, and an upright 42 adapted to support said head portion 43.

According to one embodiment the upright is, for example, but not necessarily, positioned in a vertical direction.

According to one embodiment, the position of the head portion 43 is adjustable along the upright 42.

According to one embodiment the upright comprises, at least one column 42 of circular cross-section, or a polygonal cross-section. This way the rotation of the head portion with respect to the column is prevented.

According to one embodiment, the upright 42 includes two parallel columns of circular cross- section and the head portion is slidingly engaged to both.
This way the rotation of the head portion 43 with respect to the base 41 is prevented.

According to one embodiment, the support structure 40 comprises a connection arm 49 having a first end attached to the head portion 43 and a second end attached to the support wall 44. This way, the upright 42 is kept away from the working area of pick-and-place defined by the stroke of the mobile gripping arm so as to leave the work area free.

A method for replacing or modifying the guide wall 15 of the manipulator 1 will be described below.

As described above, the shape of the cam 13defines the shape of the path of the mobile gripping arm and thus of a possible gripping element attached to the mobile gripping arm.

It may be necessary to vary the shape of this path, for example when wishing to change the release position of the piece and/or the pick-up position of the piece between different, for example different conveyors positioned side by side.

To meet this requirement it is sufficient to perform the following operating steps.

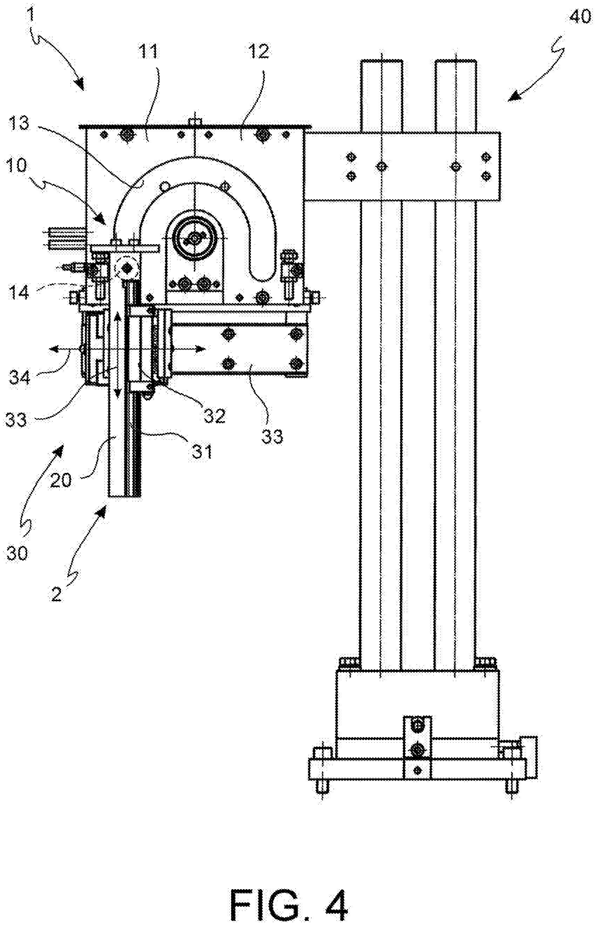

Place the mobile gripping arm 20 at a first end of the cam 13, for example as shown in figure 4.

Remove a first wall element 12 opposite the first cam end 13.

Fit another first wall element 12 having a different cam portion, in place of the first wall element 12.

Move the mobile gripping arm 20 to a second end of the cam 13 opposite the first end.

Remove the second wall element 11 opposite this second cam end 13.

Fit another second wall element 11 having a different cam portion 13, in place of the first wall element 12.

Advantageously, the manipulator according to the invention makes it possible to modify or replace the curved path to be followed by the mobile gripping arm, with a completely different path.

The invention makes it possible to perform such modification or replacement in an extremely simple, rapid and economical manner.

Another advantage is that it permits the modification or replacement of the path, by any operator even without any technical skills or knowledge of the characteristics of the manipulator.

Since the specific path is defined by the shape of the guide groove or cam, to change the path it is sufficient to replace the guide wall, or plate with a new one, and thanks to the fact that the wall is mounted externally to the oscillating arm, its removal is not obstructed by any component, so the replacement of the guide wall does not require the disassembly of other components of the manipulator.

The fact that the oscillating arm 52 is interposed between the support wall 44 and said guide wall 15 in the direction of rotation SS entails the advantage of leaving the front face of the guide wall completely free and accessible, without any impediment to easy disassembly of the guide wall.

A person skilled in the art may make modifications and adaptations to the embodiments of the device described above, so as to satisfy contingent requirements, replacing elements with others functionally equivalent, while remaining within the scope of the following claims.

## Claims

1. Manipulator (1) for moving and positioning a piece between a first position (2) and a second position (3) along a predefined path (4), having:
- a load bearing structure (40) provided with a support element (44);
- a mobile arm for gripping the piece (20) comprising a driven pin or transferor (14) projecting transversely from said mobile arm (20);
- a guide wall (15) supported by said support element (44) having a rear face (15") facing towards the support element and an opposite front face (15'), wherein said guide wall (15) comprises a curved guide groove or cam (13) configured to slidingly engage said driven pin or transferor (14) so that said pin or transferor (14) can travel along the curvilinear guide groove or cam (13) for its entire length dragging the mobile arm (20);
- an input shaft of the oscillating rotary movement (51) rotatably connected to said support element (44) in a substantially orthogonal manner to the guide wall (15), said shaft defining a rotation axis (S-S);
- an oscillating arm (52) fixed orthogonally to said input shaft of the movement (51), said oscillating arm having a radial groove (53) with respect to the input shaft of the movement (51), said radial groove (53) slidingly engaging said driven pin or transferor (14) so that said driven pin or transferor (14) can travel along the radial groove(53) for its entire length; so that the input shaft of the rotary oscillating movement (51) drags in rotation the oscillating arm, said oscillating arm dragging the driven pin or transferor simultaneously along the radial groove and along the guide groove, dragging the movable arm (20) along said predefined path (4) ;
- the input shaft of the oscillating rotary movement (51) and the oscillating arm (52) are both positioned on the side of the rear face (15") of the guide wall (15), wherein said manipulator is **characterized in that** the mobile gripping arm (20) is arranged on the side of the front face (15') of the guide wall (15).

2. Manipulator according to claim 1, wherein said oscillating arm (52) is interposed between said support element (44) and said guide wall (15) along the direction of rotation (S-S).

3. Manipulator according to claim 1 or 2, wherein the guide wall (15) is removably attached to the support element (44) by attachment means (85, 86, 87, 88) accessible in an orthogonal direction to the guide wall, in the direction that goes from said second side of the wall to said first side of the wall.

4. Manipulator according to claim 1 or 2, wherein said wall includes a wall rim (16) joining said front face (15') and said rear face (15"), in which said attachment elements (85, 86, 87,88) avoid engaging said wall rim (16).

5. Manipulator according to at least one of the previous claims comprising a sliding cross coupling (30) connecting the mobile gripping arm (20) to the load bearing structure or support element (44), to constrain the movement of the mobile gripping arm (20) only to the translation on a plane parallel to said guide wall (15) preventing any change of orientation of the mobile gripping arm (20) during its movement.

6. Manipulator according to claim 5 wherein the sliding cross coupling (30) is mounted so as to lie outside said wall rim (16), so as to permit the removal of said guide wall without having to remove said sliding coupling 30.

7. Manipulator according to at least one of the previous claims, wherein said support element (44) is a wall parallel to the guide wall (15), comprising an upper spacer element (46) adapted to form a upper support surface (46 ') for said guide wall (15), and a lower spacer element (48) adapted to form a lower support surface (48') for said guide wall (15) forming an interspace (47) of a thickness such as to house inside it said oscillating arm (52) and allow the rotation of said oscillating arm (52) inside said interspace (47).

8. Manipulator according to claim 7 and either of claims 5 or 6, wherein the sliding cross coupling (30) is attached to the lower spacer element (48).

9. Manipulator according to claim 7, wherein said lower spacer (48) supports a support bearing (54) for said input shaft of the movement (51), formed by a plate having a plate rim (54''), said support bearing plate (54)being attached to said lower spacer (48) parallel to said support wall.

10. Manipulator according to claim 9 wherein said guide wall (15) comprises an aperture (80) having a rim opening (81) complementary to the plate rim (54") of the support bearing (54), so that said plate (54'') of the support bearing (54) and said guide wall (15) are aligned on a same support surface defined by said lower spacer (48), said aperture (80) of the guide wall (15) being open towards the outside of the guide wall (15) at a rim (82) of said guide wall (15) so that said wall (15) is removable from the load-bearing structure (40) without removing other components of the manipulator (1).

11. Manipulator (1) according to any of the previous claims wherein said guide wall (15) is a flat plate formed from two plate portions (11, 12) aligned with each other substantially in such a way as to be parallel or on the same lying plane.

12. Manipulator (1) according to claim 10 wherein said two plate portions (11, 12) are translatable away from/towards each other along said lying plane so as to vary the shape of the guide groove or cam (13).

13. Manipulator (1) according to claim 12 comprising a linear actuator (90) adapted to translate at least one of said plate portions (11, 12) away from/towards the other of said plate portions (11, 12).

14. Manipulator (1) according to at least one of the previous claims, comprising:
- a rotary actuator (100) having a motor shaft(101) positioned to rotate the input shaft of the movement(51);
- a speed control of said motor shaft (101);
- proximity sensors (110, 111) positioned on the guide wall (15), or on said two plate portions (11,10 12)at or near the ends of said guide groove or cam (13) to detect the presence of the transferor (14) in said ends of the guide groove or cam (13) and transmit a proximity signal to the control, said speed control controlling said rotary actuator in a predetermined manner according to said proximity signal.

15. Method of adjustment of a manipulator (1) for moving and positioning a piece between a first position (2) and a second position (3) along a predefined path (4), said manipulator having the characteristics of at least one of the preceding claims, comprising the steps of:
- providing a guide wall (15) formed of a first plate portion (11) and a second plate portion (12) aligned with each other on the same lying plane said guide wall (15) comprising a curved guide groove or cam (13), said groove extending in part on said first plate portion (12) and in part on said second plate portion 12;
- translating said second plate portion (12) in relation to said first plate portion (11) along a common lying plane, between:
- a first relative position between said first plate portion (11) and said second plate portion (12) corresponding to a first shape of said predefined path (4), and
- a second relative position between said first plate portion (11) and said second plate portion (12) corresponding to a second shape of said predefined path (4').

## Patentansprüche

1. Manipulator (1) zum Bewegen und Positionieren eines Teils zwischen einer ersten Position (2) und einer zweiten Position (3) entlang eines vordefinierten Wegs (4), welcher aufweist:
- eine lasttragende Struktur (40), welche mit einem Halterungselement (44) bereitgestellt ist;
- einen beweglichen Arm zum Greifen des Teils (20), umfassend einen angetriebenen Stift oder Überträger (14), welcher transversal von dem beweglichen Arm (20) vorragt;
- eine von dem Halterungselement (44) gehalterte Führungswand (15), welche eine dem Halterungselement zugewandte hintere Fläche (15") sowie eine entgegengesetzte vordere Fläche (15') aufweist, wobei die Führungswand (15) eine gebogene Führungsnut oder - nocke (13) umfasst, welche konfiguriert ist, um den angetriebenen Stift oder Überträger (14) gleitbar in Eingriff zu bringen, so dass sich der Stift oder Überträger (14), den beweglichen Arm (20) ziehend, über seine gesamte Länge entlang der gekrümmten Führungsnut oder -nocke (13) bewegen kann;
- eine Eingangswelle der oszillierenden Drehbewegung (51), welche in einer zu der Führungswand (15) im Wesentlichen orthogonalen Weise drehbar mit dem Halterungselement (44) verbunden ist, wobei die Welle eine Rotationsachse (S-S) definiert;
- einen Schwingarm (52), welcher orthogonal an der Eingangswelle der Bewegung (51) befestigt ist, wobei der Schwingarm in Bezug auf die Eingangswelle der Bewegung (51) eine radiale Nut (53) aufweist, wobei die radiale Nut (53) den angetriebenen Stift oder Überträger (14) gleitbar in Eingriff bringt, so dass sich der angetriebene Stift oder Überträger (14) über seine gesamte Länge entlang der radialen Nut (53) bewegen kann; so dass die Eingangswelle der oszillierenden Drehbewegung (51) den Schwingarm in eine Rotation zieht, wobei der Schwingarm, den beweglichen Arm (20) entlang des vordefinierten Wegs (4) ziehend, den angetriebenen Stift oder Überträger gleichzeitig entlang der radialen Nut und entlang der Führungsnut zieht;
- wobei sowohl die Eingangswelle der oszillierenden Drehbewegung (51) als auch der Schwingarm (52) auf der Seite der hinteren Fläche (15") der Führungswand (15) positioniert sind, wobei der Manipulator **dadurch gekennzeichnet ist, dass** der bewegliche Greifarm (20) auf der Seite der vorderen Fläche (15') der Führungswand (15) angeordnet ist.

2. Manipulator nach Anspruch 1, wobei der Schwingarm (52) zwischen dem Halterungselement (44) und der Führungswand (15) entlang der Rotationsrichtung (S-S) eingefügt ist.

3. Manipulator nach Anspruch 1 oder 2, wobei die Führungswand (15) durch Befestigungsmittel (85, 86, 87, 88), welche in der Richtung, welche von der zweiten Seite der Wand zu der ersten Seite der Wand verläuft, in einer zu der Führungswand orthogonalen Richtung erreichbar sind, lösbar an dem Halterungselement (44) befestigt ist.

4. Manipulator nach Anspruch 1 oder 2, wobei die Wand einen Wandrand (16) umfasst, welcher die vordere Fläche (15') und die hintere Fläche (15") verbindet, wobei die Befestigungselemente (85, 86, 87, 88) ein in Eingriff bringen des Wandrandes (16) verhindern.

5. Manipulator nach wenigstens einem der vorhergehenden Ansprüche, umfassend eine gleitende Kreuzkopplung (30), welche den mobilen Greifarm (20) mit der lasttragenden Struktur oder dem Halterungselement (44) verbindet, um die Bewegung des mobilen Greifarms (20), jegliche Ausrichtungsänderung des mobilen Greifarms (20) während dessen Bewegung verhindernd, nur auf die Verschiebung auf einer zu der Führungswand (15) parallelen Ebene zu beschränken.

6. Manipulator nach Anspruch 5, wobei die gleitende Kreuzkopplung (30) derart montiert ist, dass sie außerhalb des Wandrandes (16) liegt, um das Entfernen der Führungswand zu ermöglichen, ohne die gleitende Kreuzkopplung (30) entfernen zu müssen.

7. Manipulator nach wenigstens einem der vorhergehenden Ansprüche, wobei das Halterungselement (44) eine zu der Führungswand (15) parallele Wand ist, umfassend ein oberes Distanzstückelement (46), welches dafür angepasst ist, eine obere Halterungsfläche (46') für die Führungswand (15) zu bilden, und ein unteres Distanzstückelement (48), welches dafür angepasst ist, eine untere Halterungsfläche (48') für die Führungswand (15) zu bilden, welche einen Zwischenraum (47) mit einer Dicke bildet, um darin den Schwingarm (52) aufzunehmen und die Rotation des Schwingarms (52) in dem Zwischenraum (47) zu ermöglichen.

8. Manipulator nach Anspruch 7 sowie entweder Anspruch 5 oder Anspruch 6, wobei die gleitende Kreuzkopplung (30) an dem unteren Distanzstückelement (48) befestigt ist.

9. Manipulator nach Anspruch 7, wobei das untere Distanzstück (48) eine Halterungslagerung (54) für die Eingangswelle der Bewegung (51) haltert, welche durch eine einen Plattenrand (54") aufweisende Platte gebildet ist, wobei die Halterungslagerungsplatte (54) parallel zu der Halterungswand an dem unteren Distanzstück (48) befestigt ist.

10. Manipulator nach Anspruch 9, wobei die Führungswand (15) eine Öffnung (80) umfasst, welche eine Randöffnung (81) aufweist, welche zu dem Plattenrand (54") der Halterungslagerung (54) komplementär ist, so dass die Platte (54") der Halterungslagerung (54) und die Führungswand (15) auf einer gleichen Halterungsfläche ausgerichtet sind, welche von dem unteren Distanzstück (48) definiert ist, wobei die Öffnung (80) der Führungswand (15) in Richtung des Äußeren der Führungswand (15) an einem Rand (82) der Führungswand (15) offen ist, so dass die Wand (15) von der lasttragenden Struktur (40) entfernbar ist, ohne andere Komponenten des Manipulators (1) zu entfernen.

11. Manipulator (1) nach einem der vorhergehenden Ansprüche, wobei die Führungswand (15) eine flache Platte ist, welche aus zwei Plattenabschnitten (11, 12) gebildet ist, welche im Wesentlichen derart zueinander ausgerichtet sind, dass sie parallel sind oder auf der gleichen Lageebene liegen.

12. Manipulator (1) nach Anspruch 10, wobei die beiden Plattenabschnitte (11, 12) entlang der Lageebene zueinander hin bzw. voneinander weg verschiebbar sind, um die Form der Führungsnut oder -nocke (13) zu verändern.

13. Manipulator (1) nach Anspruch 12, umfassend einen linearen Aktuator (90), welcher dafür angepasst ist, wenigstens einen der Plattenabschnitte (11, 12) weg von bzw. hin zu dem anderen der Plattenabschnitte (11, 12) zu verschieben.

14. Manipulator (1) nach wenigstens einem der vorhergehenden Ansprüche, umfassend:
- einen Rotationsaktuator (100), welcher eine Motorwelle (101) aufweist, welche posittioniert ist, um die Eingangswelle der Bewegung (51) zu drehen;
- eine Geschwindigkeitssteuerung/-regelung der Motorwelle (101);
- Näherungssensoren (110, 111), welche an der Führungswand (15) oder an den beiden Plattenabschnitten (11,10 12) an oder nahe den Enden der Führungsnut oder -nocke (13) positioniert sind, um die Gegenwart des Überträgers (14) in den Enden der Führungsnut oder -nocke (13) zu erfassen und ein Näherungssignal an die Steuerung/Regelung zu übermitteln, wobei die Geschwindigkeitssteuerung/-regelung den Rotationsaktuator in einer vorbestimmten Weise gemäß dem Näherungssignal steuert/regelt.

15. Verfahren zum Einstellen eines Manipulators (1) zum Bewegen und Positionieren eines Teils zwischen einer ersten Position (2) und einer zweiten Position (3) entlang eines vordefinierten Wegs (4), wobei der Manipulator die Merkmale wenigstens eines der vorhergehenden Ansprüche aufweist, umfassend die folgenden Schritte:
- ein Bereitstellen einer Führungswand (15), welche von einem erstem Plattenabschnitt (11) und einem zweiten Plattenabschnitt (12) gebildet ist, welche auf der gleichen Lageebene zueinander ausgerichtet sind, wobei die Führungswand (15) eine gebogene Führungsnut oder -nocke (13) umfasst, wobei sich die Nut teilweise über den ersten Plattenabschnitt (12) und teilweise über den zweiten Plattenabschnitt (12) erstreckt;
- ein Verschieben des zweiten Plattenabschnitts (12) in Bezug auf den ersten Plattenabschnitt (11) entlang einer gemeinsamen Lageebene, zwischen:
- einer ersten relativen Position zwischen dem ersten Plattenabschnitt (11) und dem zweiten Plattenabschnitt (12) entsprechend einer ersten Form des vordefinierten Wegs (4), und
- einer zweiten relativen Position zwischen dem ersten Plattenabschnitt (11) und dem zweiten Plattenabschnitt (12) entsprechend einer zweiten Form des vordefinierten Wegs (4').

## Revendications

1. Manipulateur (1) pour déplacer et positionner une pièce entre une première position (2) et une seconde position (3) le long d'un trajet prédéfini (4), ayant :
- une structure portante (40) dotée d'un élément de support (44) ;
- un bras mobile pour saisir la pièce (20) comprenant une broche ou un dispositif de transfert entraîné(e) (14) faisant saillie transversalement dudit bras mobile (20) ;
- une paroi de guidage (15) supportée par ledit élément de support (44) comportant une face arrière (15") orientée vers l'élément de support et une face avant opposée (15'), ladite paroi de guidage (15) comprenant une rainure ou came de guidage incurvée (13) configurée pour se mettre en prise de manière coulissante avec ladite broche ou ledit dispositif de transfert entraîné(e) (14) de telle sorte que ladite broche ou ledit dispositif de transfert (14) puisse se déplacer le long de la rainure ou de la came de guidage curviligne (13) pour que la totalité de sa longueur entraîne le bras mobile (20) ;
- un arbre d'entrée du mouvement de rotation oscillant (51) relié de manière rotative audit élément de support (44) d'une manière sensiblement orthogonale à la paroi de guidage (15), ledit arbre définissant un axe de rotation (S-S) ;
- un bras oscillant (52) fixé orthogonalement audit arbre d'entrée du mouvement (51), ledit bras oscillant comportant une rainure radiale (53) par rapport à l'arbre d'entrée du mouvement (51), ladite rainure radiale (53) se mettant en prise de manière coulissante avec ladite broche ou ledit dispositif de transfert d'entraînement (14) de telle sorte que ladite broche ou ledit dispositif de transfert entraîné(e) (14) puisse se déplacer le long de la rainure radiale (53) sur l'ensemble de sa longueur ; de telle sorte que l'arbre d'entrée du mouvement de rotation oscillant (51) entraîne en rotation le bras oscillant, ledit bras oscillant entraînant la broche ou le dispositif de transfert entraîné(e) simultanément le long de la rainure radiale et le long de la rainure de guidage, entraînant le bras mobile (20) le long dudit trajet prédéfini (4) ;
- l'arbre d'entrée du mouvement de rotation oscillant (51) et le bras oscillant (52) sont tous deux positionnés sur le côté de la face arrière (15") de la paroi de guidage (15), dans lequel ledit manipulateur est **caractérisé en ce que** le bras de préhension mobile (20) est placé sur le côté de la face avant (15') de la paroi de guidage (15).

2. Manipulateur selon la revendication 1, dans lequel ledit bras oscillant (52) est interposé entre ledit élément de support (44) et ladite paroi de guidage (15) le long de la direction de rotation (S-S).

3. Manipulateur selon la revendication 1 ou 2, dans lequel la paroi de guidage (15) est fixée de manière amovible à l'élément de support (44) à l'aide de moyens de fixation (85, 86, 87, 88) accessibles dans une direction orthogonale à la paroi de guidage, dans la direction qui va dudit second côté de la paroi audit premier côté de la paroi.

4. Manipulateur selon la revendication 1 ou 2, dans lequel ladite paroi comprend un rebord de paroi (16) joignant ladite face avant (15') et ladite face arrière (15"), dans lequel lesdits éléments de fixation (85, 86, 87, 88) évitent de se mettre en prise avec ledit rebord de paroi (16).

5. Manipulateur selon au moins l'une des revendications précédentes comprenant un couplage croisé coulissant (30) reliant le bras de préhension mobile (20) à la structure portante ou à l'élément de support (44), pour contraindre le mouvement du bras de préhension mobile (20) uniquement à la translation sur un plan parallèle à ladite paroi de guidage (15), empêchant un quelconque changement d'orientation du bras de préhension mobile (20) au cours de son déplacement.

6. Manipulateur selon la revendication 5, dans lequel le couplage croisé coulissant (30) est monté de sorte à s'étendre hors dudit rebord de paroi (16), de sorte à permettre le retrait de ladite paroi de guidage sans avoir à retirer ledit couplage coulissant (30).

7. Manipulateur selon au moins l'une des revendications précédentes, dans lequel ledit élément de support (44) est une paroi parallèle à la paroi de guidage (15), comprenant un élément d'espacement supérieur (46) adapté pour former une surface de support supérieure (46') pour ladite paroi de guidage (15), et un élément d'espacement inférieur (48) adapté pour former une surface de support inférieure (48') pour ladite paroi de guidage (15) formant un espace intermédiaire (47) d'une épaisseur suffisante pour loger à l'intérieur ledit bras oscillant (52) et permettre la rotation dudit bras oscillant (52) à l'intérieur dudit espace intermédiaire (47).

8. Manipulateur selon la revendication 7 et l'une des revendications 5 ou 6, dans lequel le couplage croisé coulissant (30) est fixé à l'élément d'espacement inférieur (48).

9. Manipulateur selon la revendication 7, dans lequel ledit élément d'espacement inférieur (48) supporte un palier-support (54) dudit arbre d'entrée du mouvement (51), formé par une plaque comportant un rebord de plaque (54"), ladite plaque de palier-support (54) étant fixée audit élément d'espacement inférieur (48) parallèle à ladite paroi de support.

10. Manipulateur selon la revendication 9, dans lequel ladite paroi de guidage (15) comprend une ouverture (80) comportant un orifice de rebord (81) complémentaire du rebord de plaque (54") du palier-support (54), de sorte que ladite plaque (54") du palier-support (54) et ladite paroi de guidage (15) sont alignées sur une même surface de support définie par ledit élément d'espacement inférieur (48), ladite ouverture (80) de la paroi de guidage (15) étant ouverte vers l'extérieur de la paroi de guidage (15) au niveau du rebord (82) de ladite paroi de guidage (15) de telle sorte que ladite paroi (15) peut être retirée de la structure portante (40) sans devoir retirer d'autres composants du manipulateur (1).

11. Manipulateur (1) selon l'une quelconque des revendications précédentes dans lequel ladite paroi de guidage (15) est une plaque plane formée à partir de deux parties de plaque (11, 12) alignées les unes sur les autres sensiblement de manière à être parallèles ou sur le même plan.

12. Manipulateur (1) selon la revendication 10, dans lequel lesdites deux parties de plaque (11, 12) peuvent être éloignées/rapprochées l'une de l'autre le long dudit plan de sorte à modifier la forme de la rainure ou de la came de guidage (13).

13. Manipulateur (1) selon la revendication 12, comprenant un actionneur linéaire (90) adapté pour éloigner/rapprocher au moins l'une desdites parties de plaque (11, 12) de l'autre desdites parties de plaque (11, 12).

14. Manipulateur (1) selon au moins l'une des revendications précédentes, comprenant :
- un actionneur rotatif (100) ayant un arbre de moteur (101) positionné pour faire tourner l'arbre d'entrée du mouvement (51) ;
- une commande de vitesse dudit arbre de moteur (101) ;
- des capteurs de proximité (110, 111) positionnés sur la paroi de guidage (15), ou sur lesdites deux parties de plaque (11, 10, 12) au niveau ou près des extrémités de ladite rainure ou came de guidage (13) pour détecter la présence du dispositif de transfert (14) dans lesdites extrémités de la rainure ou de la came de guidage (13) et transmettre un signal de proximité à la commande, ladite commande de vitesse commandant ledit actionneur rotatif d'une manière prédéterminée en fonction dudit signal de proximité.

15. Procédé de réglage d'un manipulateur (1) pour déplacer et positionner une pièce entre une première position (2) et une seconde position (3) le long d'un trajet prédéfini (4), ledit manipulateur ayant les caractéristiques d'au moins une des revendications précédentes, comprenant les étapes suivantes :
- la fourniture d'une paroi de guidage (15) formée d'une première partie de plaque (11) et d'une seconde partie de plaque (12) alignées l'une avec l'autre sur le même plan, ladite paroi de guidage (15) comprenant une rainure ou une came de guidage incurvée (13), ladite rainure s'étendant en partie sur ladite première partie de plaque (12) et en partie sur ladite seconde partie de plaque (12) ;
- le déplacement de ladite seconde partie de plaque (12) par rapport à ladite première partie de plaque (11) le long d'un plan commun, entre
- une première position relative entre ladite première partie de plaque (11) et ladite seconde partie de plaque (12) correspondant à une première forme dudit trajet prédéfini (4), et
- une seconde position relative entre ladite première partie de plaque (11) et ladite seconde partie de plaque (12) correspondant à une seconde forme dudit trajet prédéfini (4').
